(19) Europäisches Patentamt
European Patent Office
Office européen des brevets

(11) Veröffentlichungsnummer : **0 121 694**
**B1**

(12) **EUROPÄISCHE PATENTSCHRIFT**

(45) Veröffentlichungstag der Patentschrift : **16.04.86**

(51) Int. Cl.⁴ : **C 25 B 11/04**

(21) Anmeldenummer : **84101608.2**

(22) Anmeldetag : **16.02.84**

# (54) Katalysator zur Beschichtung von Anoden und Verfahren zu dessen Herstellung.

(30) Priorität : **11.03.83 CH 1344/83**

(43) Veröffentlichungstag der Anmeldung : **17.10.84 Patentblatt 84/42**

(45) Bekanntmachung des Hinweises auf die Patenterteilung : **16.04.86 Patentblatt 86/16**

(84) Benannte Vertragsstaaten : **CH DE FR IT LI**

(56) Entgegenhaltungen :
**DE-A- 2 625 820**
**FR-A- 2 189 122**
**GB-A- 2 017 756**
**US-A- 3 793 164**

(73) Patentinhaber : **BBC Aktiengesellschaft Brown, Boveri & Cie.**
**Haselstrasse**
**CH-5401 Baden (CH)**

(72) Erfinder : **Loitzl, Ruzica**
**Ahornweg 30**
**CH-5416 Kirchdorf (CH)**
Erfinder : **Müller, Klaus, Dr.**
**Im Eichtal 2**
**CH-5400 Baden (CH)**
Erfinder : **Hutchings, Ronald, Dr. c/o Dept. of Metallurgy and**
**Materials Science University of Cape Town**
**University Private Bag Rondebosch 7700 (ZA)**

**EP 0 121 694 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung geht aus von einem Katalysator zur Beschichtung von Anoden nach der Gattung des Oberbegriffs des Anspruchs 1 und von einem Verfahren zu dessen Herstellung nach der Gattung des Oberbegriffs des Anspruchs 4.

Es ist bekannt, elektrochemische Prozesse durch auf die Elektroden aufgebrachte Katalysatoren zu beschleunigen und zu unterstützen. Dazu werden auf der Anodenseite (z. B. Sauerstoffseite der Wasserelektrolyse) bevorzugt Platinmetalle und Platinmetalloxyde sowie deren Mischungen eingesetzt. In elektrochemischen Zellen, welche einen Kunststoffpolymer in Membranform als Feststoffelektrolyten benutzen, haben sich insbesondere Mischungen von $RuO_2$ und $IrO_2$ bewährt. Diese Platinmetalloxyde werden in der Regel in Pulverform auf den Stromsammler der Anodenseite (depassiviertes, poröses Titan) aufgebracht (US-A-4 326 943 ; Bockris, Conway, Yeager, White, Comprehensive treatise of electrochemistry, Vol. 2 : Electrochemical processing, S. 61-78, Plenum press, New York and London 1981). Im praktischen Betrieb einer derartigen elektrochemischen Zelle hat sich nun gezeigt, dass selbst die optimalsten Elektrokatalysatormischungen einer gewissen Korrosion unterliegen. Dadurch wird die Betriebszeit und damit die Lebensdauer der Zelle begrenzt. Gemäss der Umgebungsbedingungen (aktiver Sauerstoff, stark saures Medium) muss von einem derartigen Katalysator eine erhöhte Stabilität gefordert werden.

Es wurde auch schon vorgeschlagen, zwecks angeblicher Erhöhung der Stabilität von Katalysatoren den Edelmetalloxyden weitere Oxyde, beispielsweise der Elemente Ti, Sn, Bi, Sb, Ge beizufügen, wobei unter anderem auch die Bildung von Filmen angestrebt wurde (DE-B-2 213 084 ; PCT-Anmeldung WO 79/00842). Doch konnte die Lebensdauer gegenüber reinen Edelmetalloxyden als Katalysatormischungen nicht wesentlich gesteigert werden. Ausserdem litt die Elektrodenaktivität beträchtlich im Falle zusammenhängender Filme.

Weiterhin wurden Elektroden vorgeschlagen, deren Beschichtung neben $SnO_2$, $RuO_2$ und $IrO_2$ auch noch $Sb_2O_3$ und $Ta_2O_5$ bzw. $TiO_2$ enthielt (US-A-3 793 164).

Es besteht daher ein Bedürfnis, nach weiteren Katalysatormischungen Ausschau zu halten, wobei ohne Verringerung der Elektrodenaktivität eine wesentliche Verbesserung der Stabilität sowie eine Herabsetzung der Materialkosten als wünschenswert erscheinen.

Der Erfindung liegt die Aufgabe zugrunde, einen Katalysator zur Beschichtung von Anoden in elektrochemischen Zellen sowie ein Verfahren zu dessen Herstellung anzugeben, welcher gegenüber üblichen Platinmetalloxydmischungen eine höhere Stabilität und einen höheren Korrosionswiderstand in stark saurem sauerstoffhaltigen Medium besitzt und eine erhöhte Lebensdauer aufweist. Der Katalysator soll ferner eine hohe elektronische Leitfähigkeit besitzen.

Diese Aufgabe wird durch die im kennzeichnenden Teil des Anspruchs 1 und des Anspruchs 4 angegebenen Merkmale gelöst.

Die Erfindung wird anhand des durch eine Figur näher erläuterten Ausführungsbeispiels beschrieben.

Dabei zeigt :

Die Figur den Verlauf des Potentials an der Sauerstoff abscheidenden Elektrode in Funktion der Zeit als Ergebnis eines beschleunigten Lebensdauerversuchs für verschiedene Katalysatorzusammensetzungen. Die Elektrode bestand aus einem inerten, porösen, leitfähigen Stromsammler, von 1 $cm^2$ Oberfläche, der jeweils mit einer Menge von 3 mg Katalysator pro $cm^2$ aktiver Stromsammleroberfläche beschichtet war. Als offener Elektrolyt diente eine 6 normale Schwefelsäure. Die Elektrode wurde in aufeinanderfolgenden Zeiträumen mit einer Stromdichte von 1 $A/cm^2$ belastet. Als Bezugselektrode diente eine reversible Wasserstoffelektrode im gleichen Elektrolyten. Um den Einfluss des ohmschen Spannungsabfalls möglichst klein zu halten, wurden die Potentialmessungen selbst bei einer verringerten Stromdichte von 0,1 $A/cm^2$ in entsprechenden Zeitabständen durchgeführt.

Die Kurve « a » gilt für einen Katalysator der Formel

$$(Sn_{0,5}Ir_{0,25}Ru_{0,25})O_2$$

Bereits nach 200 h pendelt sich das Anfangspotential von ca. 1,61 V auf den unveränderten Wert von ca. 1,68 V ein, der auch bei Versuchen über 1 200 h Dauer konstant blieb. Als Vergleich sind noch zwei weitere Messergebnisse eingetragen. Die Kurve « b » bezieht sich auch einen herkömmlichen Katalysator der Zusammensetzung

$$(Ir_{0,5}Ru_{0,5})O_2,$$

während die Kurve « c » für das reine Iridiumoxyd

$$IrO_2$$

gilt.

Die beiden letzteren Kurven zeigen einen deutlichen stetigen Anstieg des Potentials von Anfangswerten, die bei 1,55 V (« b ») und bei 1,58 V (« c ») liegen, wobei nach ca. 800 h Dauer ein drastischer Steilanstieg zu verzeichnen ist.

Ausführungsbeispiel :

Es wurde eine Katalysatormischung mit der der nachfolgenden Formel entsprechenden Bruttozusammensetzung hergestellt :

$$(Sn_{0,5}Ir_{0,25}Ru_{0,25})O_2$$

Als Ausgangsmaterialien wurden folgende Verbindungen benutzt :

| | |
|---|---|
| $SnCl_2$ (Zinnchlorid von Fluka) ........ | 2,15 g entspr. 32,7 % |
| $H_2IrCl_6 \cdot m\ H_2O$ (Iridiumchlorwasserstoffsäure von Degussa mit 38,5 rel. Gew.-% Ir) ........ | 2,82 g entspr. 43,4 % |
| $RuCl_3 \cdot n\ H_2O$ (Rutheniumchlorid von Degussa mit 36,5 rel. Gew.-% Ru) ........ | 1,56 g entspr. 23,9 % |

Die oben genannten Substanzen wurden einzeln in je der 15- bis 25-fachen Menge (vorzugsweise in 35 bis 55 g) 2-Propanol aufgelöst. Zu diesem Zweck kann — wenn erforderlich — in vorteilhafter Weise Ultraschall herangezogen werden. Die einzelnen Lösungen wurden untereinander gemischt, wobei ein Farbumschlag von rotbraun nach intensiv grün beobachtet werden konnte. Die vereinigte Lösung wurde am Rotationsverdampfer bei einer Wasserbadtemperatur von 60 °C unter einem von einer Wasserstrahlpumpe erzeugten Vakuum bis nahezu zur Trockne eingedampft (Schwarzfärbung). Der Rückstand wurde nun während 3 h im Vakuumtrockenschrank bei einer Temperatur von 80 bis 120 °C (vorzugsweise 100 °C) vollständig getrocknet und daraufhin während weiteren 3 h bei einer Temperatur von 450 °C in Luft erhitzt. Das auf diese Weise erhaltene schwarze Pulver wurde hierauf in einem Mörser zu feinen Partikeln zerrieben. Die spezifische Oberfläche des Pulvers betrug ca. 28 $m^2/g$. Die Ausbeute, ohne Berücksichtigung der Verluste betrug ca. 70 %. Das Pulver zeigte eine nicht einheitliche Korngrössenverteilung, wobei der $SnO_2$-Gehalt mit der Korngrösse variierte. Die feineren Anteile hatten Partikelgrössen von ca. 5 bis 10 nm, während die gröberen Anteile solche von bis über 100 nm aufwiesen. Die Gitterparameter des Materials im bedeutsamen feinen Anteil wurden zu a = 0,460 nm (4,60 Å) und c = 0,318 nm (3,18 Å) bestimmt.

Zur Durchführung des beschleunigten Lebensdauerversuchs wurde das Katalysatorpulver auf einen als Stromkollektor dienenden platinierten Titanträger von 1 $cm^2$ Oberfläche aufgebracht. Die Resultate sind aus der Figur ersichtlich.

Die Erfindung ist nicht auf das oben beschriebene Ausführungsbeispiel beschränkt. Statt 25 mol-% $RuO_2$, 25 mol-% $IrO_2$ und 50 mol-% $SnO_2$ kann das Katalysatorgemisch grundsätzlich 2 bis 45 mol-% $RuO_2$, 2 bis 45 mol-% $IrO_2$ und 10 bis 96 mol-% $SnO_2$ enthalten, wobei der Stoff mindestens teilweise als Mischoxyd dem Kristalltyp des Rutils angehört und einheitliche Gitterparameter mit Werten zwischen denjenigen des $RuO_2$ und $IrO_2$ einerseits und denjenigen des $SnO_2$ andererseits besitzt. Dabei kann die Partikelgrösse des Katalysatorpulvers von 3 bis 3 000 nm variieren und die spezifische Oberfläche 10 bis 100 $m^2/g$ betragen.

Die Koeffizienten der Edelmetallsalz-Hydrate können praktisch in folgenden Grenzen variieren :

$$4{,}1 \leq m \leq 5{,}6$$
$$2{,}5 \leq n \leq 3{,}85$$

Die Auflösung der Ausgangsmaterialien kann mittels Aethanol oder Propanol erfolgen, wobei die Lösungen einen totalen Salzgehalt von 1 bis 20 Gew.-% aufweisen können. Das Glühen des getrockneten Pulvers kann während 1/2 bis 6 h bei einer Temperatur von 400 bis 500 °C durchgeführt werden.

**Patentansprüche**

1. Katalysator zur Beschichtung von Anoden in elektrochemischen Zellen auf der Basis eines Gemisches von elektronisch leitfähigen Platinmetalloxyden und weiteren Zusätzen, dadurch gekennzeichnet, dass das Gemisch aus 2 bis 45 mol-% $RuO_2$, 2 bis 45 mol-% $IrO_2$ und 10 bis 96 mol-% $SnO_2$ besteht

und dass der aus diesen Grundsubstanzen aufgebaute Stoff mindestens teilweise als Mischoxyd dem Kristalltyp des Rutils angehört und einheitliche Gitterparameter aufweist, deren Werte zwischen denjenigen des $RuO_2$ und $IrO_2$ einerseits und denjenigen des $SnO_2$ andererseits liegen.

2. Katalysator nach Anspruch 1, dadurch gekennzeichnet, dass er aus 25 mol-% $RuO_2$, 25 mol-% $IrO_2$ und 50 mol-% $SnO_2$ besteht und dass die Gitterparameter a = 0,460 nm (4,60 Å) und c = 0,318 nm (3,18 Å) betragen.

3. Katalysator nach Anspruch 1, dadurch gekennzeichnet, dass er aus einem Pulver mit einer Partikelgrösse von 3 bis 3 000 nm besteht, welches eine spezifische Oberfläche von 10 bis 100 $m^2/g$ aufweist.

4. Verfahren zur Herstellung eines Katalysators zur Beschichtung von Anoden in elektrochemischen Zellen, dadurch gekennzeichnet, dass die wasserhaltigen Ausgangsmaterialien $H_2IrCl_6 \cdot mH_2O$, $RuCl_3 \cdot nH_2O$ und $SnCl_2$, wobei

$$4{,}1 \leq m \leq 5{,}5$$
$$2{,}5 \leq n \leq 3{,}85$$

mit Aethanol oder Propanol zu einer Lösung von 1 bis 20 Gew.-% totalem Salzgehalt im Lösungsmittel versetzt werden, die auf diese Weise hergestellte Lösung am Rotationsverdampfer verdampft und das anfallende Pulver getrocknet und während 1/2 bis 6 h bei einer Temperatur von 400 bis 500 °C geglüht und abgekühlt wird.

5. Verfahren nach Anspruch 4, dadurch gekennzeichnet, dass 2,82 g $H_2IrCl_6 \cdot mH_2O$ mit 38,5 rel. Gew.-% Ir, 1,56 g $RuCl_3 \cdot nH_2O$ mit 36,5 rel. Gew.-% Ru und 2,15 g $SnCl_2$ in jeweils der 15- bis 25-fachen Menge 2-Propanol gelöst, die Lösungen gemischt und eingedampft, die anfallende Masse bei 100 °C im Vakuumtrockenschrank getrocknet und während 3 h bei 450 °C geglüht wird.

## Claims

1. Catalyst for coating anodes in electrochemical cells, based on a mixture of electronically conductive platinum metal oxides and further additives, characterised in that the mixture consists of 2 to 45 mol % of $RuO_2$, 2 to 45 mol % of $IrO_2$ and 10 to 96 mol % of $SnO_2$ and that the material built up from these base substances at least partially belongs as a mixed oxide to the rutile crystal type and has uniform lattice parameters, the values of which are between those of $RuO_2$ and $IrO_2$ on the one hand and those of $SnO_2$ on the other hand.

2. Catalyst according to Claim 1, characterised in that it consists of 25 mol % of $RuO_2$, 25 mol % of $IrO_2$ and 50 mol % of $SnO_2$ and that the lattice parameters are a = 0.460 nm (4.60 Å) and c = 0.318 nm (3.18 Å).

3. Catalyst according to Claim 1, characterised in that it consists of a powder which has a particle size of 3 to 3,000 nm and a specific surface area of 10 to 100 $m^2/g$.

4. A process for preparing a catalyst for coating anodes in electrochemical cells, characterised in that the water-containing starting materials $H_2IrCl_6 \cdot mH_2O$, $RuCl_3 \cdot nH_2O$ and $SnCl_2$, with

$$4.1 \leq m \leq 5.5$$
$$2.5 \leq n \leq 3.85$$

are treated with ethanol or propanol to give a solution of 1 to 20 % by weight total salt content in the solvent, the solution prepared in this way is evaporated in a rotary evaporator and the powder obtained is dried and calcined for 1/2 to 6 hours at a temperature of 400 to 500 °C and cooled.

5. Process according to Claim 4, characterised in that 2.82 g of $H_2IrCl_6 \cdot mH_2O$ with 38.5 % by weight relative of Ir, 1.56 g of $RuCl_3 \cdot nH_2O$ with 36.5 % by weight relative of Ru and 2.15 g of $SnCl_2$ are in each case dissolved in 15 to 25 times the quantity of 2-propanol, the solutions are mixed and evaporated, the mass obtained is dried at 100 °C in a vacuum drying oven and calcined for 3 hours at 450 °C.

## Revendications

1. Catalyseur pour le revêtement d'anodes dans des cellules électrochimiques, à base d'un mélange d'oxydes de métaux du groupe du platine, conducteurs électroniques et de composés supplémentaires, caractérisé en ce que le mélange est constitué de 2 à 45 moles % de $RuO_2$, de 2 à 45 moles % d'$IrO_2$ et de 10 à 96 moles % de $SnO_2$, et en ce que la substance élaborée à partir de ces produits de départ est au moins en partie du type d'un oxyde mixte du type cristallin du rutile et manifeste des paramètres de réseau uniformes, dont les valeurs se trouvent entre celles du $RuO_2$ de l'$IrO_2$ d'une part et celles du $SnO_2$ d'autre part.

2. Catalyseur selon la revendication 1, caractérisé en ce qu'il est constitué de 25 moles % de $RuO_2$, de 25 moles % d'$IrO_2$ et de 50 moles % de $SnO_2$ et en ce que les paramètres de réseau s'élèvent à a = 0,460 nm (4,60 Å) et c = 0,318 nm (3,18 Å).

3. Catalyseur selon la revendication 1, caractérisé en ce qu'il est constitué d'une poudre de taille particulaire de 3 à 3 000 nm, laquelle manifeste une surface spécifique de 10 à 100 $m^2/g$.

4. Procédé de préparation d'un catalyseur pour le revêtement d'anodes dans des cellules électrochimiques, caractérisé en ce que les produits de départ hydratés $H_2IrCl_6 \cdot mH_2O$, $RuCl_3 \cdot nH_2O$ et $SnCl_2$, dans lesquels

$$4{,}1 \leq m \leq 5{,}5$$
$$2{,}5 \leq n \leq 3{,}85$$

sont passés, avec de l'éthanol ou du propanol, dans une solution de 1 à 20 % en poids de la teneur en sels totale dans le solvant, en ce que la solution obtenue de cette manière est évaporée à l'aide d'un évaporateur rotatif et en ce que la poudre résultante est séchée et calcinée pendant 1/2 jusqu'à 6 heures, à une température de 400 à 500 °C puis refroidie.

5. Procédé selon la revendication 4, caractérisé en ce que 2,82 g de $H_2IrCl_6 \cdot mH_2O$ avec 38,5 % en poids rel. d'Ir, 1,56 g de $RuCl_3 \cdot nH_2O$ avec 36,5 % en poids rel. de Ru et 2,15 g de $SnCl_2$ sont dissous chacun dans 15 à 25 fois la quantité de propanol-2, en ce que les solutions sont mélangées et évaporées, en ce que la masse résultante est séchée dans une étuve à vide à 100 °C et calcinée pendant 3 h à 450 °C.

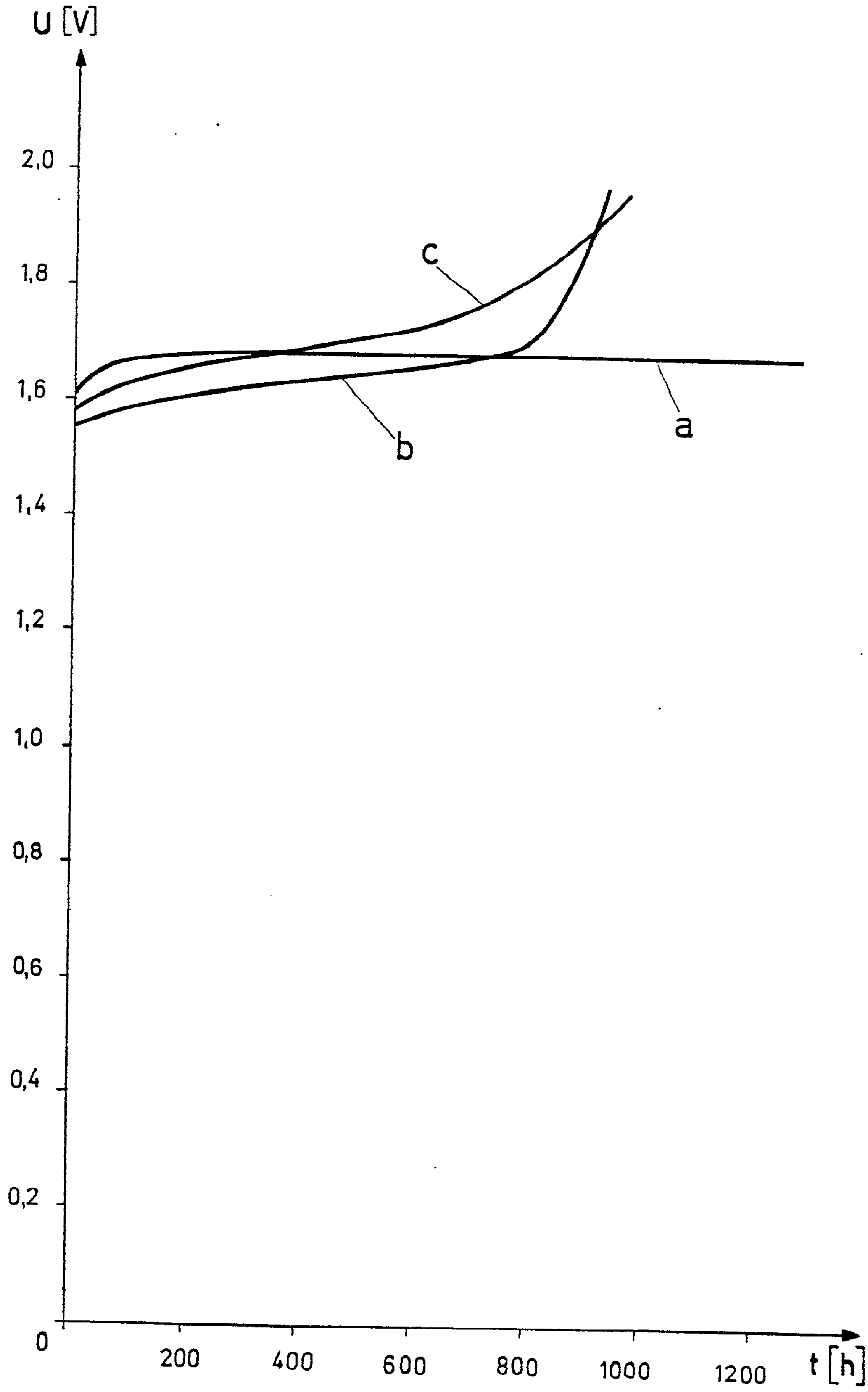


23/83 1/1